(19) Europäisches Patentamt
European Patent Office
Office européen des brevets

(11) **EP 4 193 240 B1**

(12) **EUROPEAN PATENT SPECIFICATION**

(45) Date of publication and mention
of the grant of the patent:
**07.08.2024 Bulletin 2024/32**

(21) Application number: **21736459.5**

(22) Date of filing: **07.06.2021**

(51) International Patent Classification (IPC):
*G06F 1/26* (2006.01)    *G01K 3/14* (2006.01)
*H02J 7/00* (2006.01)    *G01K 3/00* (2006.01)
*G01K 7/42* (2006.01)    *G06F 1/20* (2006.01)

(52) Cooperative Patent Classification (CPC):
**G01K 3/14; G01K 3/005; G01K 7/427; G06F 1/206;
G06F 1/26; G06F 1/263; G06F 1/266;
H02J 7/00309; H02J 7/007192;** G01K 2003/145;
H02J 2207/30; H02J 2310/22; Y02D 10/00

(86) International application number:
**PCT/US2021/036172**

(87) International publication number:
**WO 2022/072009 (07.04.2022 Gazette 2022/14)**

(54) **VIRTUAL TEMPERATURE SENSOR**

VIRTUELLER TEMPERATURSENSOR

CAPTEUR DE TEMPÉRATURE VIRTUEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2020 US 202063084797 P**

(43) Date of publication of application:
**14.06.2023 Bulletin 2023/24**

(73) Proprietor: **Google LLC
Mountain View, CA 94043 (US)**

(72) Inventors:
• **STARMAN, Jared
Mountain View, California 94043 (US)**
• **MEHLMAN, Michael
Mountain View, California 94043 (US)**
• **WANG, TeYuan
Mountain View, California 94043 (US)**
• **CROSBIE, Paul B.
Mountain View, California 94043 (US)**

(74) Representative: **Marks & Clerk GST
1 New York Street
Manchester M1 4HD (GB)**

(56) References cited:
**EP-A1- 3 160 004    WO-A1-2019/141629
US-A1- 2015 048 804**

EP 4 193 240 B1

## Description

### BACKGROUND

A mobile computing device, such as a mobile phone, may include a power storage device, such as a battery. The computing device may also include a connector via-which power is received from an external power supply to charge the power storage device. Due to a variety of causes, short circuits may occur in the connector and such short circuits may result in undesirable heating.

EP3160004 discloses an example method includes receiving electrical power via a physical connector of a mobile computing device; determining, by a controller of the mobile computing device, a value of a temperature of a virtual temperature sensor, the value representing a difference between a temperature measured by a first temperature sensor of a plurality of temperature sensors of the mobile computing device and a temperature measured by a second temperature sensor of the plurality of temperature sensors, wherein a distance between the first temperature sensor and the physical connector is less than a distance between the second temperature sensor and the physical connector; determining, based on the value of the temperature of the virtual temperature sensor, whether an overheat event has occurred; and responsive to determining that the overheat event has occurred, reducing an amount of electrical current flowing through the physical connector.

### SUMMARY

A mobile computing device may be configured to automatically cease charging based on a temperature of a connector via-which power is received from an external power supply. For instance, the mobile computing device may include a temperature sensor proximate to the connector. Responsive to a temperature measured by the temperature sensor being greater than a threshold temperature, the mobile computing device may determine that an overheat event has occurred and reduce, in some examples to zero, an amount of current flowing through the connector. In this way, the mobile computing device may mitigate overheating issues resulting from short circuits in the connector. However, in some examples, the temperature measured by the temperature sensor may not be an accurate representation of a temperature of the connector. As one example, one or more other components of the mobile computing device may, in normal operation, generate heat proximate to the connector that increases the temperature measured by the temperature sensor, falsely indicating the occurrence of an overheat event. As another example, a circuit board on-which the connector and the temperature sensor are mounted may absorb some heat generated in the connecter during an actual short circuit event, which may result in a delay before detection of an actual overheat event or even a failure to detect an overheat event.

In accordance with the present invention, a mobile computing device as defined in claim 1, a method as defined in claim 8, and a computer-readable storage medium as defined in claim 14 are provided. By using measurements from differently located temperature sensors, the mobile computing device may improve the accuracy of overheat event occurrence. As one example, using the temperature measured by the second temperature sensor may reduce the likelihood that a false positive detection will occur as a result of heat generated by other components (e.g., as such heat would raise the measurements generated by both sensors). As another example, using the temperature measured by the second temperature sensor may reduce the likelihood that a false negative detection will occur as a result of heat being absorbed by the circuit board (e.g., as there would still be a heat gradient between the two sensors).

According to the invention, a mobile computing device includes a physical connector configured to receive a charging cable; a plurality of temperature sensors; and a controller configured to: detect, based on a difference between a temperature measured by a first temperature sensor of the plurality of temperature sensors and a temperature measured by a second temperature sensor of the plurality of temperature sensors, an occurrence of an overheat event in the physical connector, wherein a distance between the first temperature sensor and the physical connector is less than a distance between the second temperature sensor and the physical connector; and responsive to detecting the occurrence of the overheat event, reducing an amount of electrical current flowing through the physical connector.

According to the invention, a method includes receiving electrical power via a physical connector of a mobile computing device; determining, by a controller of the mobile computing device, a value of a temperature of a virtual temperature sensor, the value representing a difference between a temperature measured by a first temperature sensor of a plurality of temperature sensors of the mobile computing device and a temperature measured by a second temperature sensor of the plurality of temperature sensors, wherein a distance between the first temperature sensor and the physical connector is less than a distance between the second temperature sensor and the physical connector; determining, based on the value of the temperature of the virtual temperature sensor, whether an overheat event has occurred; and responsive to determining that the overheat event has occurred, reducing an amount of electrical current flowing through the physical connector.

According to the invention, a computer-readable storage medium stores instructions that, when executed, cause a mobile computing device to receive electrical power via a physical connector of a mobile computing device; determine a value of a temperature of a virtual temperature sensor, the value representing a difference between a temperature measured by a first temperature sensor of a plurality of temperature sensors of the mobile computing device and a temperature measured by a second temperature sensor of the plurality of temperature sensors, wherein a distance between the first temperature sensor and the physical connector is less than a distance between the second temperature sensor and the physical connector; determine, based on the value of the temperature of the virtual temperature sensor, whether an overheat event has occurred; and reduce, responsive to determining that the overheat event has occurred, an amount of electrical current flowing through the physical connector.

Additional features, advantages, and embodiments of the disclosed subject matter may be set forth or apparent from consideration of the following detailed description, drawings, and claims. Moreover, it is to be understood both the foregoing summary and the following detailed description are illustrative and are intended to provide further explanation without limiting the scope of the claims.

## BRIEF DESCRIPTION OF THE DRAWINGS

FIG. 1 is a block diagram illustrating a representation of a system that includes a mobile computing device and a power supply, in accordance with one or more aspects of this disclosure.

FIG. 2 is a block diagram illustrating further details of one example of a circuit board of a mobile computing device, in accordance with one or more aspects of this disclosure.

FIG. 3 is a flow diagram illustrating example operations of a mobile device that detects overheat events using a virtual sensor, in accordance with one or more techniques of this disclosure.

## DETAILED DESCRIPTION

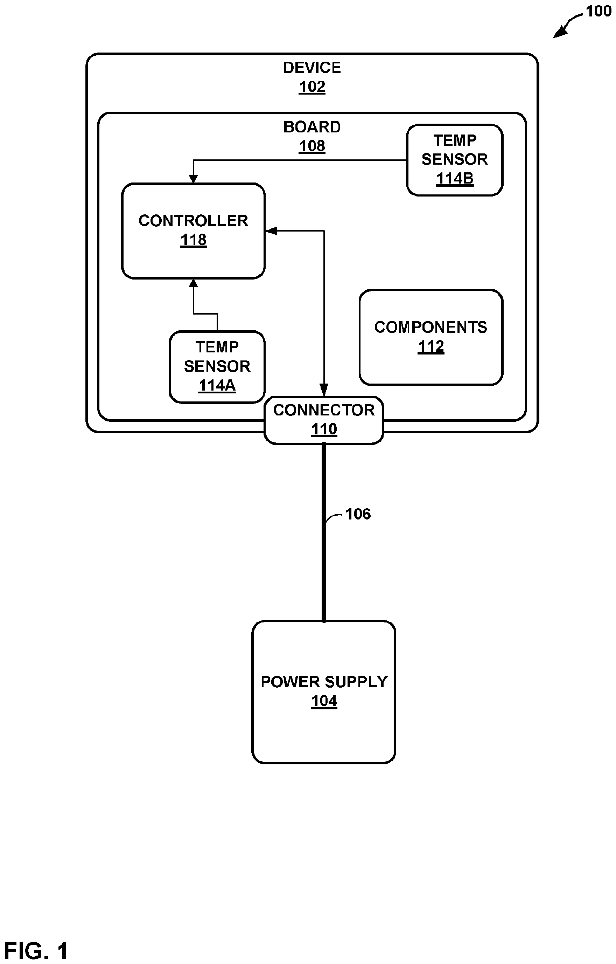

FIG. 1 is a block diagram illustrating a representation of a system that includes a mobile computing device and a power supply, in accordance with various aspects of this disclosure. As shown in FIG. 1, system 100 may include mobile computing device 102, power supply 104, and cable 106.

Power supply 104 may represent any external device (e.g., external from mobile computing device 102) that is capable of providing electrical power to mobile computing device 102. Examples of power supply 104 include, but are not limited to, mains adapters (e.g., wall adapters such as AC/DC adapters), portable power banks, other mobile computing devices (e.g., smartphones, laptops, tablets, etc.), and the like. Power supply 104 may provide electrical power to mobile computing device 102 via a wired connection over cable 106. In some examples, cable 106 may be permanently attached to power supply 104. In other examples, cable 106 may be connected to power supply 104 via a connector, which may or may not be the same connector type as connector 110 of mobile computing device 102 as discussed below.

Cable 106 may be any cable capable of transporting electrical power from power supply 104 to mobile computing device 102. Examples of cable 106 include, but are not limited to, universal serial bus (USB) cables, Thunderbolt cables, Lightning cables, and/or the like.

Mobile computing device 102 may be any device capable of operating using power received from an external power supply, such as power supply 104. Examples of mobile computing device 102 may include, but are not limited to, a mobile phone (including a so-called "smartphone"), smart glasses, a smart watch, a portable speaker (including a portable smart speaker), a laptop computer, a portable gaming system, a wireless gaming system controller, a wireless headphone charging case, and the like. As shown in FIG. 1, mobile computing device 102 may include, circuit board 108, connector 110, components 112, temperature sensors 114A and 114B (collectively, "temperature sensors 114"), and controller 118.

Circuit board 108 may be any type of circuit board to-which other components may be attached. Circuit board 108 may be a printed circuit board and may have multiple layers with embedded traces electrically connecting components. In some examples, circuit board 108 may be referred to as a main logic board (MLB) to-which primary components of mobile computing device 102 may be attached (e.g., a system on a chip (SoC), an application processor, memory, storage, etc.). In the example of FIG. 1, at least connector 110, temperature sensor 114A and temperature sensor 114B may be attached to board 108. However, in some examples, components 112 and/or controller 118 may also be attached to board 108.

Connector 110 is a physical connector configured to receive a connector of cable 106. Examples of connector 110 include, but are not limited to, universal serial bus (USB) connectors, Thunderbolt connectors, Lightning connectors, or any connector via-which electrical power may be received over a wired connection. In one specific example, connector 110 may be a USB type-C connector (e.g., a receptacle).

Components 112 may represent any components of mobile computing device 102 that generate heat during operation. Examples of components 112 include, but are not limited to, processors (e.g., application processors), power management components (e.g., power management integrated circuits, wireless charging components, wired charging components), batteries (e.g., when charging), displays, display controllers, camera components (e.g., camera flash light emitting diodes (LEDs)), wireless radios (e.g., 4G radios, 5G radios, Wi-Fi radios, Bluetooth radios, RF power amplifiers, etc.), speakers, areas of high current flow, and the like.

Temperature sensors 114 represent any components that measure temperature. Examples of temperature sensors 114 include, but are not limited to, thermistors, thermocouples, and any other components that generate a signal as a function of temperature. Sensors of temperature sensors 114 may be positioned at various locations of mobile computing device 102. For instance, as shown in the example of FIG. 1, temperature sensors 114A and 114B may both be attached to board 108, with temperature sensor 114A more proximal to connector 110 than temperature sensor 114B. In some examples, one or more of temperature sensors 114 may be standalone temperature sensors (e.g., discrete components). In some examples, one or more of temperature sensors 114 may be integrated into other components. For instance, a temperature sensor of temperature sensors 114 may be integrated into a component of components 112.

Controller 118 may be configured to control operations of various functions of mobile computing device 102. For instance, controller 118 may be configured to communicate with power supply 104 (e.g., via cable 106) to negotiate one or more parameters of a power signal provided by power supply 104. For example, controller 118 may communicate with power supply 104 in accordance with the USB power delivery (USB-PD) standard published by the USB Implementers Forum, Inc (available at usb.org/document-library/usb-power-delivery). Examples of controller 118 include, but are not limited to, one or more digital signal processors (DSPs), general purpose microprocessors, application specific integrated circuits (ASICs), field programmable logic arrays (FPGAs), or other equivalent integrated or discrete logic circuitry

In operation, controller 118 may monitor various aspects of mobile computing device 102. According to the present invention, controller 118 monitors for occurrence of an overheat event in connector 110. Responsive to detecting the occurrence of the overheat event in connector 110, controller 118 reduces an amount of electrical current flowing through connector 110. For instance, controller 118 may output, via cable 106, a signal to power supply 104 requesting that power supply 104 reduce an amount of power provided to mobile computing device 102. As the overheat event is most likely the result of current flowing through a short circuit in connector 110, reducing the amount of current flowing through connector 110 may reduce the amount of heat generated by current flowing through the short circuit, thereby mitigating heat-induced damage.

As temperature sensor 114A is proximal to connector 110, the temperature sensed by temperature sensor 114A may closely represent the actual temperature of connector 110. In examples not forming part of the present invention, controller 118 may detect an occurrence of an overheat event solely based on the temperature measured by temperature sensor 114A. For instance, controller 118 may determine that an overheat event has occurred responsive to the temperature sensed by temperature sensor 114A being greater than a threshold temperature.

However, in some examples, it may not be desirable to detect occurrences of overheat events solely based on the temperature measured by temperature sensor 114A. As one example, one or more of components 112 may, in normal operation, generate heat proximate to connector 110 that increases the temperature measured by temperature sensor 114A. Such heat generation may cause controller 118 to falsely detect the occurrence of an overheat event. As another example, board 108 (e.g., on-which connector 110 and temperature sensor 114A may be mounted) may absorb some heat generated in connecter 110 during an actual short circuit event, which may result in a delay before controller 118 may detect of an actual overheat event or even a failure of controller 118 to detect an overheat event.

In accordance with the present invention, controller 118 detects occurrence of an overheat event using a virtual sensor that is generated using temperatures sensed by at least two of temperature sensors 114. Controller 118 generates a temperature value of the virtual sensor as a difference between temperatures sensed by temperature sensor 114A and temperature sensor 114B. If the difference value is greater than a threshold temperature (example threshold temperatures include, but are not limited to, 4, 5, 6, 7, 8, 9, or 10 degrees Celsius), controller 118 may detect occurrence of an overheat event in connector 110. As discussed above, responsive to detecting the occurrence of the overheat event, controller 118 reduces an amount of electrical current flowing through connector 110.

By using a virtual temperature sensor generated based on measurements from differently located temperature sensors, controller 118 may improve the accuracy of overheat event occurrence. As one example, using the temperature measured by temperature sensor 114B may reduce the likelihood that a false positive detection will occur as a result of heat generated by components 112 (e.g., as such heat would raise the measurements generated by both sensors 114A and 114B, thus not raising the differential temperature). As another example, using the temperature measured by temperature sensor 114B may reduce the likelihood that a false negative detection will occur as a result of heat being absorbed by board 108 (e.g., as there would still be a heat gradient between temperature sensor 114A and temperature sensor 114B which would cause the differential temperature to exceed the threshold temperature when significant heat is generated in connector 110).

While described above as detecting occurrence of the overheat event based on a value of a virtual sensor determined as a difference between temperatures measured by two sensors, the techniques of this disclosure are not so limited. For instance, in some examples, controller 118 may the value of the virtual sensor may be a difference between a temperature measured by a first temperature sensor and a function of temperatures measured by a set of temperature sensors, which may include two or more temperature sensors. As one example, controller 118 may determine the value of the virtual sensor as a difference between a temperature measured by temperature sensor 114A and a function of a temperature measured by temperature sensor 114B and a temperature measured by another temperature sensor. In some examples, the function may be an average of the temperatures measured by the set of temperature sensors. By determining the value of the virtual sensor using a function of the set of temperature sensors, controller 118 may reduce false positives (e.g., false positive detections of overheat events) that may be cause from heat generated by multiple internal sources (e.g., where multiple members of components 112 are generating heat).

As one example, where the average is an evenly weighted average, controller 118 may determine the value of the virtual sensor in accordance with the following equation:

$$T_{Virtual} = T_{FirstSensor} - \frac{1}{N} \sum_{i=1}^{N} T_{Sensori}$$

where $T_{virtual}$ is the value of the virtual sensor, $T_{FirstSensor}$ is the temperature measured by the first temperature sensor (e.g., temperature sensor 114A), $N$ is the quantity of temperature sensors included in the set of temperature sensors, and $T_{Sensori}$ is the temperature measured by the $i$th sensor of the set of temperature sensors.

As another example, where the average is an unevenly weighted average, controller 118 may determine the value of the virtual sensor in accordance with the following equation:

$$T_{Virtual} = T_{FirstSensor} - \frac{1}{N} \sum_{i=1}^{N} T_{Sensori} w_i$$

where $T_{Virtual}$ is the value of the virtual sensor, $T_{FirstSensor}$ is the temperature measured by the first temperature sensor (e.g., temperature sensor 114A), $N$ is the quantity of temperature sensors included in the set of temperature sensors, $T_{Sensori}$ is the temperature measured by the $i$th sensor of the set of temperature sensors, and $w_i$ is the weight for the $i$th sensor of the set of temperature sensors. In some examples, the weights (e.g., values of $w_i$) may be based on distances between temperature sensors of the two or more temperature sensors and the physical connector.

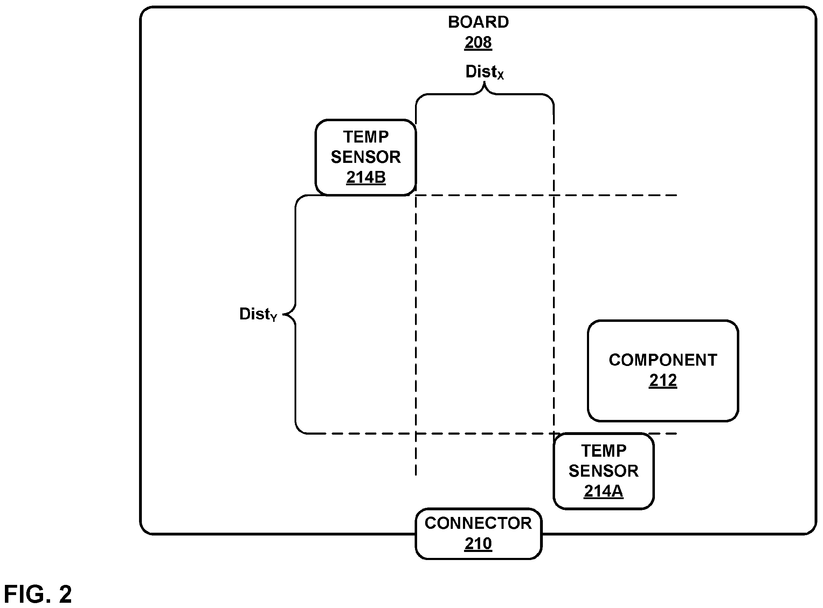

FIG. 2 is a block diagram illustrating further details of one example of a circuit board of a mobile computing device, in accordance with one or more aspects of this disclosure. Board 208 of FIG. 2 may be considered an example of board 108 of FIG. 1. Similarly, connector 210 and temperature sensors 214A and 214B (collectively, "temperature sensors 214") may be considered examples of connector 110 and temperature sensors 114A and 114B of FIG. 1. Component 212 may be considered to be an example of a component of components 112 of FIG. 1.

As shown in FIG. 2, component 212 is closer to connector 210 than temperature sensor 214B is to connector 210. In particular, a distance between component 212 and connector may be less than a distance between temperature sensor 214B and connector 210. As shown in FIG. 2, temperature sensor 214 is closer to connector 210 than component 212 is to connector 210. For instance, a distance between component 212 and connector 210 may be greater than a distance between temperature sensor 214A and connector 210. However, in other examples, component 212 may be located closer to connector 210 than temperature sensor 214A is to connector 210. For instance, a distance between component 212 and connector 210 may be less than a distance between temperature sensor 214A and connector 210.

As shown in FIG. 2 and according to the present invention, temperature sensors 214 are distributed such that a distance between temperature sensor 214A and connector 210 is less than a distance between temperature sensor 214B and connector 210. As such, temperature sensor 214A may be considered to be closer to connector 210 than temperature sensor 214B is to connector 210. Temperature sensor 214A may be horizontally displaced from temperature sensor 214B by $Dist_x$ and/or vertically displaced from temperature sensor 214B by $Dist_y$. In some examples, $Dist_x$ may be greater than 10mm, such as 19mm. In some examples $Dist_y$ may be greater than 20mm, such as 35mm. As such, in some examples, temperature sensor 214A may be at least 3 centimeters from temperature sensor 214B. As discussed above, spacing temperature sensor 214A away from temperature sensor 214B may provide various advantages, such as increased sensitivity to overheat events in connector 210.

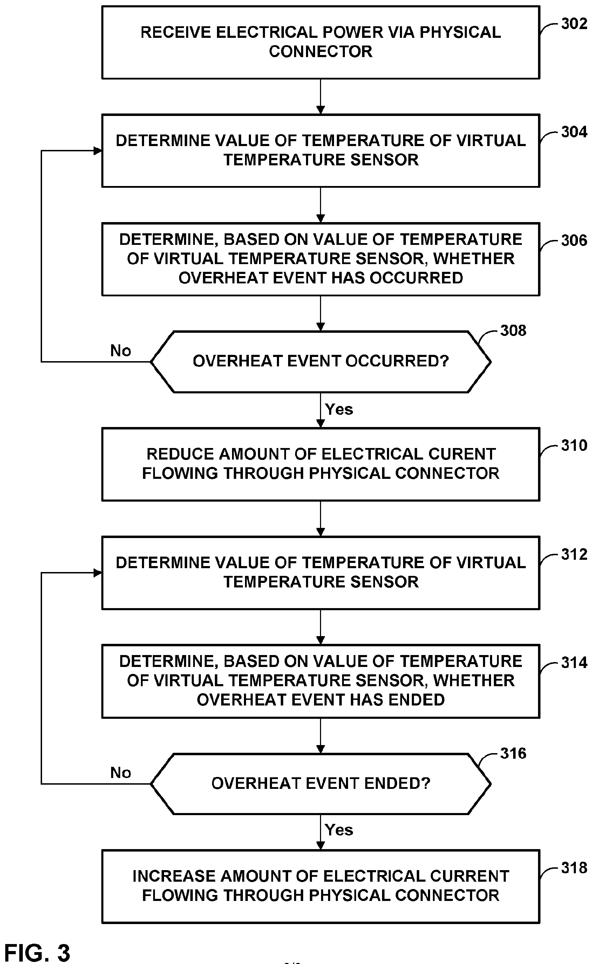

FIG. 3 is a flow diagram illustrating example operations of a mobile device that detects overheat events using a virtual sensor, in accordance with one or more techniques of this disclosure. Although described with reference to mobile computing device of FIG. 1, the operations of FIG. 3 may be performed by components of any suitable mobile computing device.

Mobile computing device 102 receives electrical power via a physical connector (302). For instance, mobile computing device 102 may receive electrical power from power supply 104 of FIG. 1 via cable 106 connected to connector 110.

Mobile computing device 102 determines a value of a temperature of a virtual temperature sensor (304). According to the invention, controller 118 determines a difference between a temperature measured by a first temperature sensor, such as temperature sensor 114A, and a temperature measured by a second temperature sensor, such as temperature sensor 114B. As discussed above, a distance between temperature sensor 114A and physical connector 110 is less than a distance between temperature sensor 114B and physical connector 110.

Mobile computing device 102 determines, based on the value of the temperature of the virtual temperature sensor, whether an overheat event has occurred (306). For instance, controller 118 may determine that the overheat event has occurred responsive to determining that the difference between the temperature measured by the first temperature sensor and the temperature measured by the second temperature sensor being greater than a threshold temperature. In other words, controller 118 may determine that the overheat event has occurred responsive to determining that the temperature differential between temperature sensor 114A and temperature sensor 114B is greater than the threshold temperature.

Where the overheat event has not occurred ("No" branch of 308), mobile computing device 102 may continue to monitor the value of the temperature of the virtual temperature sensor (304). According to the invention, responsive to determining that the overheat event has occurred ("Yes" branch of 308), mobile computing device reduces an amount of electrical current flowing through the physical connector (310). For instance, controller 118 may output, via cable 106, a signal to power supply 104 requesting that power supply 104 reduce an amount of power provided to the mobile computing device. As one example, controller 118 may output, via cable 106, a signal to power supply 104 requesting that power supply 104 cease providing power to mobile computing device 102. By reducing the amount of current flowing through the connector, mobile computing device 102 may stop the overheating event from continuing.

In some examples, mobile computing device 102 may attempt to resume receiving power when the overheat event has passed. For instance, after reducing the amount of current flowing through the physical connector, mobile computing device 102 may determine an updated value of the temperature of the virtual temperature sensor (312) in a manner similar to (304). Mobile computing device 102 may determine, based on the updated value of the temperature of the virtual temperature sensor, whether the overheat event has ended (314). For instance, controller 118 may detect an end of the overheat event responsive to the difference between the temperature measured by the first temperature sensor and the temperature measured by the second temperature sensor being less than a threshold temperature. In some examples, the threshold temperature used by mobile computing device 102 to determine whether an overheat event has ended may be the same as the threshold temperature used to determine whether the overheat event has occurred. In other examples, the threshold temperature used by mobile computing device 102 to determine whether an overheat event has ended may be different than (e.g., lower than) the threshold temperature used to determine whether the overheat event has occurred. As such, mobile computing device 102 may implement a hysteresis. By using a hysteresis, mobile computing device 102 may avoid frequent adjustments to the amount of power received.

Where the overheat event has not ended ("No" branch of 316), mobile computing device 102 may continue to monitor the value of the temperature of the virtual temperature sensor (312). Responsive to determining that the overheat event has ended ("Yes" branch of 316), mobile computing device may increase an amount of electrical current flowing through the physical connector (318). For instance, controller 118 may output, via cable 106, a signal to power supply 104 requesting that power supply 104 increase an amount of power provided to mobile computing device 102. As one example, controller 118 may output, via cable 106, a signal to power supply 104 requesting that power supply 104 resume providing power to mobile computing device 102.

**Claims**

1. A mobile computing device (100) comprising:

    a physical connector (110) configured to receive a charging cable (106);
    a plurality of temperature sensors (114A; 114B); and
    a controller (118) configured to:

    detect, based on a difference between a temperature measured by a first temperature sensor of the plurality of temperature sensors and a temperature measured by a second temperature sensor of the plurality of temperature sensors, an occurrence of an overheat event in the physical connector, wherein a distance between the first temperature sensor and the physical connector is less than a distance between the second temperature sensor and the physical connector; and
    responsive to detecting the occurrence of the overheat event, reduce an amount of electrical current flowing through the physical connector.

2. The mobile computing device of claim 1, wherein, to detect the occurrence of the overheat event, the controller is configured to detect the occurrence of the overheat event responsive to the difference between the temperature measured by the first temperature sensor and the temperature measured by the second temperature sensor being greater than a threshold temperature.

3. The mobile computing device of claim 1 or 2, further comprising:
a circuit board (208), wherein the plurality of temperature sensors and the physical connector are attached to the circuit board; and optionally:
further comprising one or more components (212) attached to the circuit board that generate heat during operation; and further optionally:
wherein a distance between at least one of the one or more components and the connector is less than the distance between the second temperature sensor and the physical connector.

4. The mobile computing device of any one of claims 1 to 3, wherein, to reduce the amount of electrical current flowing through the physical connector, the controller is configured to:
output, via the charging cable, a signal to a power supply requesting that the power supply reduce an amount of power provided to the mobile computing device.

5. The mobile computing device of claim 4, wherein, to output the signal, the controller is configured to:
output, via the charging cable, a signal to the power supply requesting that the power supply cease providing power to the mobile computing device.

6. The mobile computing device of claim 5 and claim 2, wherein the threshold temperature is a first threshold temperature, and wherein the controller is further configured to:

detect an end of the overheat event responsive to the difference between the temperature measured by the first temperature sensor and the temperature measured by the second temperature sensor being less than a second threshold temperature, the second threshold temperature being lower than the first threshold temperature; and
responsive to detecting the end of the overheat event, output, via the charging cable, a signal to the power supply requesting that the power supply resume providing power to the mobile computing device.

7. The mobile computing device of any preceding claim, wherein the physical connector is a universal serial bus type-C connector.

8. A method comprising:

receiving electrical power via a physical connector of a mobile computing device (302);
determining, by a controller of the mobile computing device, a value of a temperature of a virtual temperature sensor (304), the value representing a difference between a temperature measured by a first temperature sensor of a plurality of temperature sensors of the mobile computing device and a temperature measured by a second temperature sensor of the plurality of temperature sensors, wherein a distance between the first temperature sensor and the physical connector is less than a distance between the second temperature sensor and the physical connector;
determining, based on the value of the temperature of the virtual temperature sensor, whether an overheat event has occurred (306); and
responsive to determining that the overheat event has occurred, reducing an amount of electrical current flowing through the physical connector (310).

9. The method of claim 8, wherein

determining whether the overheat event has occurred comprises determining that the overheat event has occurred responsive to determining that the difference between the temperature measured by the first temperature sensor and the temperature measured by the second temperature sensor being greater than a threshold temperature; and/or
the plurality of temperature sensors and the physical connector are attached to a circuit board; and/or
the physical connector is a universal serial bus type-C connector.

10. The method of claim 8 or 9, further comprising:

generating, by one or more components of the mobile computing device, heat, wherein a distance between at least one of the one or more components and the connector is less than the distance between the second temperature sensor and the physical connector; and/or
charging, using the electrical power received via the physical connector, a power storage device of the mobile computing device.

11. The method of any one of claims 8 to 10, wherein reducing the amount of electrical current flowing through the physical connector comprises:
outputting, by the mobile computing device and via a charging cable, a signal to a power supply requesting that the power supply reduce an amount of power provided to the mobile computing device.

12. The method of claim 11, wherein outputting the signal comprises:
outputting, by the mobile computing device and via the charging cable, a signal to the power supply requesting that the power supply cease providing power to the mobile computing device.

13. The method of claim 12 and claim 9, wherein the threshold temperature is a first threshold temperature, and wherein the method further comprises:

detecting an end of the overheat event responsive to the difference between the temperature measured by the first temperature sensor and the temperature measured by the second temperature sensor being less than a second threshold temperature, the second threshold temperature being lower than the first threshold temperature; and

responsive to detecting the end of the overheat event, outputting, via the charging cable, a signal to the power supply requesting that the power supply resume providing power to the mobile computing device.

14. A computer-readable storage medium storing instructions that, when executed, cause the controller of the mobile computing device according to one of claims 1-7 to:

detect, based on a difference between a temperature measured by the first temperature sensor of a plurality of temperature sensors of the mobile computing device and a temperature measured by the second temperature sensor of the plurality of temperature sensors, an occurrence of an overheat event in the physical connector of the mobile computing device, wherein a distance between the first temperature sensor and the physical connector is less than a distance between the second temperature sensor and the physical connector; and reduce, responsive to detecting the occurrence of the overheat event, an amount of electrical current flowing through the physical connector.

15. The computer-readable storage medium of claim 14, wherein the instructions that cause the controller to reduce the amount of electrical current comprise instructions that cause the controller to:

output, via a charging cable connected to the physical connector, a signal to a power supply requesting that the power supply reduce an amount of power provided to the mobile computing device.

**Patentansprüche**

1. Mobile Computervorrichtung (100), umfassend:

einen physischen Verbinder (110), der dafür konfiguriert ist, ein Ladekabel (106) aufzunehmen;
eine Vielzahl von Temperatursensoren (114A; 114B); und
eine Steuerungseinrichtung (118), die dafür konfiguriert ist:

auf der Grundlage einer Differenz zwischen einer durch einen ersten Temperatursensor der Vielzahl von Temperatursensoren gemessenen Temperatur und einer durch einen zweiten Temperatursensor der Vielzahl von Temperatursensoren gemessenen Temperatur ein Auftreten eines Überhitzungsereignisses in dem physischen Verbinder zu ermitteln, wobei ein Abstand zwischen dem ersten Temperatursensor und dem physischen Verbinder geringer ist als ein Abstand zwischen dem zweiten Temperatursensor und dem physischen Verbinder; und
als Antwort auf das Ermitteln des Auftretens des Überhitzungsereignisses eine durch den physischen Verbinder fließende Menge an elektrischem Strom zu verringern.

2. Mobile Computervorrichtung nach Anspruch 1, wobei, um das Auftreten des Überhitzungsereignisses zu ermitteln, die Steuerungseinrichtung dafür konfiguriert ist, das Auftreten des Überhitzungsereignisses als Antwort darauf zu ermitteln, dass die Differenz zwischen der durch den ersten Temperatursensor gemessenen Temperatur und der durch den zweiten Temperatursensor gemessenen Temperatur größer als eine Schwellentemperatur ist.

3. Mobile Computervorrichtung nach Anspruch 1 oder 2, ferner umfassend:

eine Leiterplatte (208), wobei die Vielzahl von Temperatursensoren und der physische Verbinder an der Leiterplatte angebracht sind; und optional:
ferner eine oder mehrere an der Leiterplatte angebrachte Komponenten (212) umfassend, die während des Betriebs Wärme erzeugen; und ferner optional:
wobei ein Abstand zwischen mindestens einer der einen oder den mehreren Komponenten und dem Verbinder geringer ist als der Abstand zwischen dem zweiten Temperatursensor und dem physischen Verbinder.

4. Mobile Computervorrichtung nach einem der Ansprüche 1 bis 3, wobei die Steuerungseinrichtung dafür konfiguriert ist, um die durch den physischen Verbinder fließende Menge an elektrischem Strom zu verringern:
über das Ladekabel ein Signal an eine Energieversorgung auszugeben, welches verlangt, dass die Energieversorgung eine für die Mobilvorrichtung bereitgestellte Energiemenge verringert.

**5.** Mobile Computervorrichtung nach Anspruch 4, wobei die Steuerungseinrichtung dafür konfiguriert ist, um das Signal auszugeben:
über das Ladekabel ein Signal an die Energieversorgung auszugeben, welches verlangt, dass die Energieversorgung das Bereitstellen von Energie für die mobile Computervorrichtung einstellt.

**6.** Mobile Computervorrichtung nach Anspruch 5 und Anspruch 2, wobei die Schwellentemperatur eine erste Schwellentemperatur ist und wobei die Steuerungseinrichtung ferner dafür konfiguriert ist:

als Antwort darauf, dass die Differenz zwischen der durch den ersten Temperatursensor gemessenen Temperatur und der durch den zweiten Temperatursensor gemessenen Temperatur kleiner als eine zweite Schwellentemperatur ist, ein Ende des Überhitzungsereignisses zu ermitteln, wobei die zweite Schwellentemperatur niedriger als die erste Schwellentemperatur ist; und
als Antwort auf das Ermitteln des Endes des Überhitzungsereignisses über das Ladekabel ein Signal an die Energieversorgung auszugeben, welches verlangt, dass die Energieversorgung das Bereitstellen von Energie für die mobile Computervorrichtung wiederaufnimmt.

**7.** Mobile Computervorrichtung nach einem der vorhergehenden Ansprüche, wobei der physische Verbinder ein Typ-C-Verbinder für den Universal Serial Bus ist.

**8.** Verfahren, umfassend:

Empfangen von elektrischer Energie über einen physischen Verbinder einer mobilen Computervorrichtung (302);
Bestimmen eines Werts einer Temperatur eines virtuellen Temperatursensors (304) durch eine Steuerungseinrichtung der mobilen Computervorrichtung, wobei der Wert eine Differenz zwischen einer durch einen ersten Temperatursensor einer Vielzahl von Temperatursensoren der mobilen Computervorrichtung gemessenen Temperatur und einer durch einen zweiten Temperatursensor der Vielzahl von Temperatursensoren gemessenen Temperatur darstellt, wobei ein Abstand zwischen dem ersten Temperatursensor und dem physischen Verbinder geringer ist als ein Abstand zwischen dem zweiten Temperatursensor und dem physischen Verbinder;
Bestimmen auf der Grundlage des Werts der Temperatur des virtuellen Temperatursensors, ob ein Überhitzungsereignis aufgetreten ist (306); und
als Antwort auf das Bestimmen, dass das Überhitzungsereignis eingetreten ist, Verringern einer durch den physischen Verbinder fließenden Menge an elektrischem Strom (310).

**9.** Verfahren nach Anspruch 8, wobei:

das Bestimmen, ob das Überhitzungsereignis aufgetreten ist, umfasst: Bestimmen, dass das Überhitzungsereignis aufgetreten ist, als Antwort auf das Bestimmen, dass die Differenz zwischen der durch den ersten Temperatursensor gemessenen Temperatur und der durch den zweiten Temperatursensor gemessenen Temperatur größer als eine Schwellentemperatur ist; und/oder
die Vielzahl von Temperatursensoren und der physische Verbinder an einer Leiterplatte angebracht sind; und/oder
der physische Verbinder ein Typ-C-Verbinder für den Universal Serial Bus ist.

**10.** Verfahren nach Anspruch 8 oder 9, ferner umfassend:

Erzeugen von Wärme durch eine oder mehrere Komponenten der mobilen Computervorrichtung, wobei ein Abstand zwischen mindestens einer der einen oder mehreren Komponenten und dem Verbinder geringer ist als der Abstand zwischen dem zweiten Temperatursensor und dem physischen Verbinder; und/oder
Laden einer Energiespeichervorrichtung der mobilen Computervorrichtung unter Verwendung der über den physischen Verbinder empfangenen elektrischen Energie.

**11.** Verfahren nach einem der Ansprüche 8 bis 10, wobei das Verringern der durch den physischen Verbinder fließenden Menge an elektrischem Strom umfasst:
durch die mobile Computervorrichtung und über ein Ladekabel erfolgendes Ausgeben eines Signals an eine Energieversorgung, welches verlangt, dass die Energieversorgung eine für die mobile Computervorrichtung bereitgestellte Energiemenge verringert.

**12.** Verfahren nach Anspruch 11, wobei das Ausgeben des Signals umfasst:
durch die mobile Computervorrichtung und über das Ladekabel erfolgendes Ausgeben eines Signals an die Energieversorgung, welches verlangt, dass die Energieversorgung das Bereitstellen von Energie für die mobile Computervorrichtung einstellt.

**13.** Verfahren nach Anspruch 12 und Anspruch 9, wobei die Schwellentemperatur eine erste Schwellentemperatur ist und wobei das Verfahren ferner umfasst:

Ermitteln eines Endes des Überhitzungsereignisses als Antwort darauf, dass die Differenz zwischen der durch den ersten Temperatursensor gemessenen Temperatur und der durch den zweiten Temperatursensor gemessenen Temperatur kleiner als eine zweite Schwellentemperatur ist, wobei die zweite Schwellentemperatur niedriger als die erste Schwellentemperatur ist; und

als Antwort auf das Ermitteln des Endes des Überhitzungsereignisses, Ausgeben eines Signals über das Ladekabel an die Energieversorgung, welches verlangt, dass die Energieversorgung das Bereitstellen von Energie für die mobile Computervorrichtung wiederaufnimmt.

14. Computerlesbares Speichermedium, das Anweisungen speichert, die, wenn sie ausgeführt werden, die Steuerungseinrichtung der mobilen Computervorrichtung nach einem der Ansprüche 1 bis 7 dazu veranlassen:

auf der Grundlage einer Differenz zwischen einer durch den ersten Temperatursensor einer Vielzahl von Temperatursensoren der mobilen Computervorrichtung gemessenen Temperatur und einer durch den zweiten Temperatursensor der Vielzahl von Temperatursensoren gemessenen Temperatur ein Auftreten eines Überhitzungsereignisses in dem physischen Verbinder der mobilen Computervorrichtung zu ermitteln, wobei ein Abstand zwischen dem ersten Temperatursensor und dem physischen Verbinder geringer ist als ein Abstand zwischen dem zweiten Temperatursensor und dem physischen Verbinder; und

als Antwort auf das Ermitteln des Auftretens des Überhitzungsereignisses eine durch den physischen Verbinder fließende Menge an elektrischem Strom zu verringern.

15. Computerlesbares Speichermedium nach Anspruch 14, wobei die Anweisungen, welche die Steuerungseinrichtung veranlassen, die Menge an elektrischem Strom zu verringern, Anweisungen umfassen, welche die Steuerungseinrichtung dazu veranlassen: über ein Ladekabel, das mit dem physischen Verbinder verbunden ist, ein Signal an eine Energieversorgung auszugeben, welches verlangt, dass die Energieversorgung eine für die mobile Computervorrichtung bereitgestellte Energiemenge verringert.

**Revendications**

1. Dispositif informatique mobile (100) comprenant :

un connecteur physique (110) configuré pour recevoir un câble de chargement (106) ; une pluralité de capteurs de température (114A ; 114B) ; et un dispositif de commande (118) configuré pour :

détecter, sur la base d'une différence entre une température mesurée par un premier capteur de température de la pluralité de capteurs de température et une température mesurée par un deuxième capteur de température de la pluralité de capteurs de température, une occurrence d'événement de surchauffe dans le connecteur physique, dans lequel une distance entre le premier capteur de température et le connecteur physique est inférieure à une distance entre le deuxième capteur de température et le connecteur physique ; et en réponse à la détection de l'événement de surchauffe, réduire la quantité de courant électrique circulant à travers le connecteur physique.

2. Dispositif informatique mobile selon la revendication 1, dans lequel, pour détecter l'occurrence de l'événement de surchauffe, le dispositif de commande est configuré pour détecter l'occurrence de l'événement de surchauffe en réponse au fait que la différence entre la température mesurée par le premier capteur de température et la température mesurée par le deuxième capteur de température est supérieure à une température seuil.

3. Dispositif informatique mobile selon la revendication 1 ou 2, comprenant en outre : une carte de circuit imprimé (208), dans lequel la pluralité de capteurs de température et le connecteur physique sont fixés à la carte de circuit imprimé ; et facultativement : comprenant en outre un ou plusieurs composants (212) attachés à la carte de circuit imprimé qui génèrent de la chaleur pendant le fonctionnement ; et facultativement, en outre : dans lequel une distance entre au moins un des un ou plusieurs composants et le connecteur est inférieure à la distance entre le deuxième capteur de température et le connecteur physique.

4. Dispositif informatique mobile selon l'une quelconque des revendications 1 à 3, dans lequel, pour réduire la quantité de courant électrique circulant à travers le connecteur physique, le dispositif de commande est configuré pour : émettre, par l'intermédiaire du câble de chargement, un signal à l'intention d'une source d'alimentation demandant à la source d'alimentation de réduire la quantité d'énergie fournie au dispositif informatique mobile.

**5.** Dispositif informatique mobile selon la revendication 4, dans lequel, pour émettre le signal, le dispositif de commande est configuré pour :
émettre, par l'intermédiaire du câble de chargement, un signal à l'intention de la source d'alimentation demandant que celle-ci cesse d'alimenter le dispositif informatique mobile.

**6.** Dispositif informatique mobile selon les revendications 5 et 2, dans lequel la température seuil est une première température seuil, et dans lequel le dispositif de commande est en outre configuré pour :

détecter la fin de l'événement de surchauffe en réponse au fait que la différence entre la température mesurée par le premier capteur de température et la température mesurée par le deuxième capteur de température est inférieure à un deuxième seuil de température, le deuxième seuil de température étant inférieur au premier seuil de température ; et
en réponse à la détection de la fin de l'événement de surchauffe, émettre, par l'intermédiaire du câble de chargement, un signal à la source d'alimentation demandant que la source d'alimentation recommence à alimenter le dispositif informatique mobile.

**7.** Dispositif informatique mobile selon l'une quelconque des revendications précédentes, dans lequel le connecteur physique est un connecteur de bus série universel de type C.

**8.** Procédé comprenant les étapes consistant à :

recevoir de l'énergie électrique par l'intermédiaire d'un connecteur physique d'un dispositif informatique mobile (302) ;
déterminer, par le biais d'un dispositif de commande du dispositif informatique mobile, une valeur de température d'un capteur de température virtuel (304), la valeur représentant une différence entre une température mesurée par un premier capteur de température d'une pluralité de capteurs de température du dispositif informatique mobile et une température mesurée par un deuxième capteur de température de la pluralité de capteurs de température, dans lequel une distance entre le premier capteur de température et le connecteur physique est inférieure à une distance entre le deuxième capteur de température et le connecteur physique ;
déterminer, sur la base de la valeur de la température du capteur de température virtuel, si un événement de surchauffe s'est produit (306) ; et
en réponse à la détermination que l'événement de surchauffe s'est produit, réduire une quantité de courant électrique circulant à travers le connecteur physique (310).

**9.** Procédé selon la revendication 8, dans lequel

l'étape consistant à déterminer si l'événement de surchauffe s'est produit comprend l'étape consistant à déterminer que l'événement de surchauffe s'est produit en réponse à la détermination que la différence entre la température mesurée par le premier capteur de température et la température mesurée par le deuxième capteur de température est supérieure à une température seuil ; et/ou
la pluralité de capteurs de température et le connecteur physique sont fixés à une carte de circuit imprimé ; et/ou
le connecteur physique est un connecteur de bus série universel de type C.

**10.** Procédé selon les revendications 8 ou 9, comprenant en outre les étapes consistant à :

générer de la chaleur par un ou plusieurs composants du dispositif informatique mobile, dans lequel la distance entre au moins l'un des un ou plusieurs composants et le connecteur est inférieure à la distance entre le deuxième capteur de température et le connecteur physique ; et/ou
charger, à l'aide de l'énergie électrique reçue par l'intermédiaire du connecteur physique, un dispositif de stockage d'énergie du dispositif informatique mobile.

**11.** Procédé selon l'une quelconque des revendications 8 à 10, dans lequel la réduction de la quantité de courant électrique circulant à travers le connecteur physique comprend :
émettre, par le dispositif informatique mobile et par l'intermédiaire d'un câble de chargement, un signal à destination d'une source d'alimentation demandant à la source d'alimentation de réduire une quantité d'énergie fournie au dispositif informatique mobile.

**12.** Procédé selon la revendication 11, dans lequel l'émission du signal comprend :
l'émission, par le dispositif informatique mobile et par l'intermédiaire du câble de chargement, d'un signal à l'intention de la source d'alimentation demandant que la source d'alimentation cesse de fournir de l'énergie au dispositif informatique mobile.

**13.** Procédé selon la revendication 12 et selon la revendication 9, dans lequel la température seuil est une première température seuil, et dans lequel le procédé comprend en outre :

la détection de la fin de l'événement de surchauffe en réponse au fait que la différence entre la température mesurée par le premier capteur de température et la température mesurée par le deuxième capteur de température est inférieure à un deuxième seuil de température, le deuxième seuil de température étant inférieur au premier seuil de température ; et
en réponse à la détection de la fin de l'événement de surchauffe, l'émission, par l'intermédiaire du câble de chargement, d'un signal à l'alimentation électrique demandant que l'alimentation électrique recommence à alimenter le dispositif informatique mobile.

14. Support de stockage lisible par ordinateur stockant des instructions qui, lorsqu'elles sont exécutées, amènent le dispositif de commande du dispositif informatique mobile selon l'une des revendications 1 à 7 à :

détecter, sur la base d'une différence entre une température mesurée par le premier capteur de température d'une pluralité de capteurs de température du dispositif informatique mobile et une température mesurée par le deuxième capteur de température de la pluralité de capteurs de température, un événement de surchauffe dans le connecteur physique du dispositif informatique mobile,
dans lequel une distance entre le premier capteur de température et le connecteur physique est inférieure à une distance entre le deuxième capteur de température et le connecteur physique ; et
en réponse à la détection de l'événement de surchauffe, réduire une quantité de courant électrique circulant à travers le connecteur physique.

15. Support de stockage lisible par ordinateur selon la revendication 14, dans lequel les instructions qui amènent le dispositif de commande à réduire la quantité de courant électrique comprennent des instructions qui amènent le dispositif de commande à :
émettre, par l'intermédiaire d'un câble de chargement connecté au connecteur physique, un signal à l'intention d'une source d'alimentation demandant à la source d'alimentation de réduire une quantité d'énergie fournie au dispositif informatique mobile.

**FIG. 1**

FIG. 2

FIG. 3

**REFERENCES CITED IN THE DESCRIPTION**

**Patent documents cited in the description**

- EP 3160004 A